# EUROPEAN PATENT APPLICATION

(11) **EP 0 658 828 A1**
(43) Date of publication of application: **21.06.1995**
(21) Application number: 94420334.8
(22) Date of filing: 01.12.1994
(51) Int. Cl.: G03G 21/00, G03C 1/76, C08L 75/04

(54) **Particle transfer film and method of using same**

(30) Priority: 16.12.1993 US 168617
(71) Applicant: EASTMAN KODAK COMPANY, Rochester, New York 14650-2201 (US)
(72) Inventor: Ramos, Fernando, Jr., Eastman Kodak Company, Rochester, New York 14650-2201 (US); Yacobucci, Paul Daniel, Eastman Kodak Company, Rochester, New York 14650-2201 (US)
(74) Representative: Parent, Yves

(57) **Abstract**

A particle transfer film (10) has a substrate (12) having coated thereon an exterior layer (14) of polyurethane. The polyurethane is copolymerized with a charge control agent of the formula 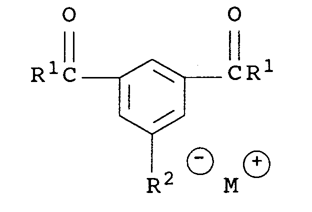
where R¹ represents: 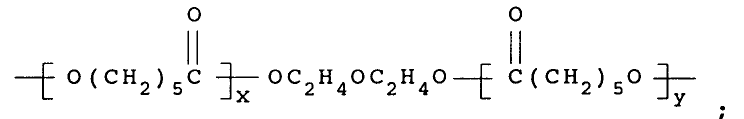
R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000; and
M represents hydrogen, an alkali metal, ammonium or P⁺(C₆H₅)₃CH₃.
The charge control agent is nonleachable from the polyurethane and is present in an amount sufficient to impart a selected amount of electric charge resistivity to the polyurethane.

## Description

### Field of Invention

This invention relates to a particle transfer film comprising a substrate material coated with a polyurethane copolymerized with a charge control agent. The invention also relates to a method of cleaning conveyance elements using the particle transfer film.

### Background of the Invention

In any converting process, such as in support manufacturing or photographic film sensitizing/finishing operations, or document duplicators, particulate contamination inevitably collect on conveyance elements (e.g idler rollers, coating rollers, vacuum drive rollers, etc). Often these particles dislodge and contaminate the product causing a variety of defects. Contamination remaining on the conveyance elements cause other product defects such as surface impressions and digs.

It is often advantageous to clean the conveyance elements without significantly interrupting the operation by simply conveying a material containing an adhesive layer after or before a production run. The adhesive layer removes the particulate contamination as it makes contact with the conveyance elements. A disadvantage of using this method is the high electrical static charge generated as the adhesive material separates from the conveyance elements thus often causing excessive electrical discharge. The discharge is not only hazardous to personnel but can be quite dangerous such as in a manufacturing process utilizing volatile solvents or in a photographic film process where the film can be easily exposed (fogged) by the light generated. A charge control agent can be added to the adhesive to control the static discharge. Charge control agents work by leaching out of the adhesive, collecting on the adhesive surface and, being by design very hydrophilic, collect moisture from the surrounding environment. The moisture laden charge control agent provides a mechanism for electron movement to ground thus preventing charge buildup. Eventually, with use, enough of the charge control agent is removed from the adhesive so as to significantly diminish or eliminate the static dissipating ability of the adhesive, thus limiting the useful life of the cleaning material. Also, the charge control agent can collect on the conveyance elements and subsequently contaminate product. It is therefore desirable to have a cleaning material having a non-leaching and permanent charge control agent; by definition this cleaning material is to be called particle transfer film to differentiate it from other material having leachable constituents.

It is an object of the invention to provide a particle transfer film and method for its use having a nonleachable charge control agent therein. It is also an object of the invention to provide a particle transfer film having an extended usable life.

### SUMMARY OF THE INVENTION

The invention provides a particle transfer film comprising:
a substrate;
an exterior layer of polyurethane on the substrate,
the polyurethane being copolymerized with a charge control agent of the formula 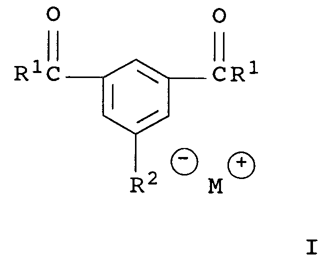
where
R¹ represents: 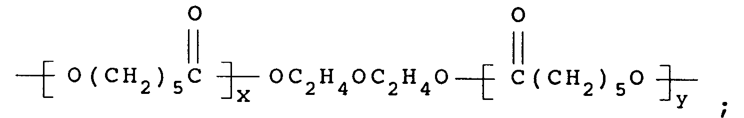
R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000;
M represents hydrogen, an alkali metal, ammonium or P⁺(C₆H₅)₃CH₃;
wherein the charge control agent is nonleachable from the polyurethane and is present in an amount sufficient to impart a selected amount of electric charge resistivity to the polyurethane.

The invention also provides a method of cleaning conveyance elements, comprising contacting the elements with a particle transfer film having an exterior layer of polyurethane having the charge control agent of Formula I copolymerized therein, the nonleachable charge control agent being present in an amount sufficient to impart a selected amount of electric charge resistivity to the polyurethane.

The particle transfer film of the invention, and method for its use, provide good charge control without the problem of leaching out of the charge control agent. The particle transfer film does not contaminate the elements being cleaned. The particle transfer film effectively retains the charge control agent, extending its useful lifetime.

### BRIEF DESCRIPTION OF THE DRAWINGS

Figure 1 is an cross sectional view of a particle transfer film of the invention.

Figure 2 is diagrammatic view of a typical use of the particle transfer film of the invention in contact with conveyance elements.

Figure 3 is diagrammatic view of a typical use of the particle transfer film of the invention in contact with conveyance elements in a converting process.

### DESCRIPTION OF THE PREFERRED EMBODIMENTS

The particle transfer films of the invention are formed from polyurethane elastomers, using starting materials and methods that are well known in the art, and are copolymerized with a charge control agent further described below.

The polyurethane elastomers are formed by reacting polyisocyanate prepolymers, formed from an excess of an isocyanate, a hardener, and a plasticizer. The hardener comprises a polyol crosslinked and/or chain extended with at least one additional polyol. Prepolymers and hardeners useful in forming the particle transfer films of the invention are described in U.S. 4,762,941, incorporated herein by reference.

As taught by USP '941, representative polyurethanes of this invention are prepared by admixing the prepolymer with the polyol hardener. Catalysts and optional additives are included within the hardener. Generally stoichiometric amounts of prepolymer and polyol are utilized, with the possibility of deviating from the stoichiometric amount of utilizing up to about 25% excess prepolymer or up to about 2% excess polyol. Solid, thermoset polyurethane elastomers are obtained within about 40 minutes at room temperature.

Catalysts are known to those skilled in the art and may comprise, for example, heavy metals utilized in amounts of about 0.1% metal, by weight of hardener, e.g. organo tin, organo zinc, mercury and lead compounds. Tertiary amines may also be utilized.

Optional additives include anti-foaming agents such as glycerine, an ethyl acrylate-2-ethylhexyl acrylate copolymer, dimethyl siloxane copolymers and silicones; antioxidants such as esters of B-(3,5-di-tert,butyl-4-hydroxyphenyl)-propionic acid with monohydric or polyhydric alcohols, for example, methanol, octadecanol, 1,6-hexanedio, neopentylglycol, thiodiethyleneglycol, diethyleneglycol, triethyleneglycol, pentaerythrito, tris-hydroxyethyl isocyanurate, and di-hydroxyethyl oxalic acid diamide; UV absorbers and light stabilizers such as 2-(2'-hydroxyphenyl)benzotriazoles and sterically hidered amines as bis-(2,2,6,6-tetramethylpiperidyl)-sebacate, bis-(1,2,2,6,6-pentamethyl-piperidyl)-sebacate, n-butyl-3,5-di-tert,butyl-4-hydroxybenzyl malonic acid bis-(1,2,2,6,6-pentamethyl-piperidyl)-ester, condensation product of 1-hydroxyethyl-2,2,6,6-tetramethyl-4-hydroxypiperidine and succinic acid, condensation product of N,N'-(2,2,6,6-tetramethylpiperidyl)-hexamethylendiamine and 4-tert.octylamino-2,6-dichloro-1,3,5-s-triazine, tris-(2,2,6,6-tetramethylpiperidyl)-nitrilotriacetate, tetrakis-(2,2,6,6-tetramethyl-4-piperidyl)-1,2,3,4-butane-tetracarbonic acid and 1,1'(1,2-ethanediyl)-bis-(3,3,5,5-tetramethylpiperazinone); plasticizers such as phthalates, adipates, glutarates, epoxidized vegetable oils, and the like; fungicides, pigments; dyes; reactive dyes; moisture scavengers; and the like.

The prepolymer-hardener mixtures used in the present invention, prior to curing, exhibit sufficiently low viscosities to facilitate mixing, pouring and air bubble diffusion, thereby allowing for the formation of bubble free castings of both simple and intricate shapes. The resulting molded conductive products exhibit low shrinkage during molding and subsequent thereto.

The plasticizer is added to control the hardness of the polyurethane elastometer in order to provide a resilient and flexible material useful in its intended environment as a particle transfer film. Typically, a plasticizer such as a phthalate, for example, dibutyl terephthalate, provides good control over the hardness of the formed polyurethane article. Useful plasticizers also include adipates and glutamates and the like.

The charge control agent is a polyol that can be added to the polyol hardener in forming the polyurethane in an amount replacing a desired weight percentage of the hardener, as described in the Examples below. Polyols useful in preparing the prepolymers and finished polyurethane elastomers are exemplified by those disclosed in U.S. pat. Nos. 2,969,386; 3,455,855; 4,476,292 and 4,390,679. One preferred group of polyols are aliphatic polyols and glycols such as glycerol, trimethylolpropane, 1,3-butylene glycol, propylene glycol, hydroxylated castor oils, hydroxyl-terminated polybutadienes, polyethers such as poly butylene ether glycols and polypropylene ether glycols and alkylenebis(polycaprolactones).

Another preferred group of polyols are amine-based polyols. The amine-based polyols employed to prepare the prepolymer and/or chain extend the prepolymer to the final conductive bulk polyurethane generally have an equivalent weight of from 30 to 6000 and a viscosity of from 1.0 to 20,000 centipoises at 25° C.-60° C. A wide variety of aromatic and aliphatic diamine may form part of the amine-based polyols. Such polyols include N,N,N',N'-tetrakis(2-hydroxypropyl)ethylene-diamine and a polymer of ethylene diamine, propylene oxide and ethylene oxide. A typical aromatic amine-based polyol is available from Upjohn under the designation ISO-NOL 100; a typical aliphatic amine-based polyol is available from BASF under the designation QUADROL and a typical ethylene diamine/propylene oxide/ethylene oxide polymer is available from BASF under the designation PLURACOL 355.

The nonleachable charge control agent should be present in an amount sufficient to impart the desired or selected amount of electric charge resistivity to the formed polyurethane film. In a preferred embodiment, the charge control agent is present in the amount of from about 1 percent to about 4 percent by weight with the polyurethane.

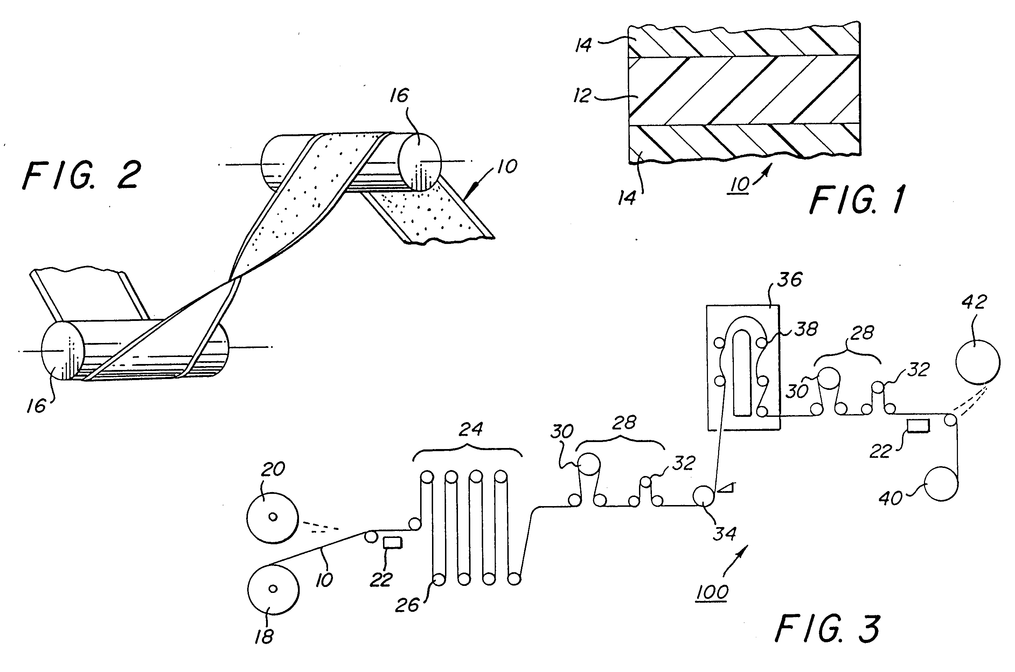

FIG. 1 illustrates a particle transfer film of the invention. Particle transfer film **10** has a substrate **12** and an exterior polyurethane coating **14**. Substrate **12** is made of a flexible material such as polyethylene (terephthalate). Layer **14** comprises polyurethane copolymerized with a charge control agent as described herein. Layer **14** is preferably applied to substrate **12** through a conventional casting process; however, it is also within the scope of the invention to spray layer **14** onto substrate **12**. The surface finish of coating **14** is generally sufficient for cleaning idler or drive rollers with the surface roughness average (Ra) typically ranging from about 1.25 micrometers to about 3.50 micrometers. The rough surface prevents total contact with the surface to be cleaned and to itself when it is wound into a roll; total contact causes excessive adhesion. Although not necessary for cleaning, the surface roughness is a preferred feature for preventing problems resulting from excessive unwinding and conveyance tension as the particle transfer film is pulled through a converting machine.

Coating **14** need not be applied over the entire surface of the substrate **12**. Rather, layer **14** only need be applied to the area that will contact and clean the conveyance element in the intended use. The thickness of layer **14** can vary; and, it depends on the intended application and factors such as the desired lifetime of the particle transfer film **10**, the web speed and acceleration, the anticipated rate of surface wear of the particle transfer film **10**, and the like. Also, layer **14** can be applied to only one surface of base **12** if desired. Preferably, the polyurethane layer has a surface coverage in the range of about 1.0 to about 100 grams/m². A thickness in the range of 0.0114 mm to 0.0140 mm is preferred by the inventors. Below this range, voids in the film have been observed by the inventors, thus making the film unusable. On the other hand, above this range, it has been determined that an excessive amount of material is used.

FIG. 2 shows the particle transfer film **10** in contact with conveyance elements **16** in a wrap mode configuration, that is, with the film **10** wrapped around roller **16**. A sufficient wrap tension should be provided to maintain particle transfer film **10** in contact with elements **16** during cleaning as further described below. Tension should exceed the yield strength of the substrate **12**. A particle transfer film functions in a well known manner to remove particles from a roller by contact with the rolling element. The particle transfer film has a larger coefficient of adhesion than that of the roller, enabling the particle transfer film to pull particles free of the roller and accumulate on the surface of the particle transfer film.

Figure 3 is an illustration of the particle transfer film of the invention in contact with the conveyance elements of a film sensitizing machine **100**. In this illustration, the leading edge of the particle transfer film **10** is unwound from a roll **18** and spliced to the product web **10** using splicing board **22**. The accumulator section **24** has enough capacity so as not to interrupt the movement of the product web throughout the rest of the machine **100**. The accumulator section **24** allows the particle transfer film **10** to accelerate to line speed as it is being pulled by the product web. As the particle transfer film **10** is conveyed through the sensitizing machine **100** it cleans various conveyance elements such as accumulator idler rollers **26**, vacuum drive rollers **30**, tension control rollers **32** and dryer section **36** rollers **38**, and is wound at the windup **40**. After the conveyance elements have been sufficiently cleaned, the product roll **20** is spliced to the end of the particle transfer film **10** at the splicing board **22**. As the spliced end of the particle transfer film **10** reaches the windup end **110** of the machine **100** the product web is spliced to the previous product web and wound into product roll **42**. The trailing edge of the particle transfer film **10** continues into particle transfer film roll **40**. An alternative utilization of the invention, as described in Figure 3, comprises using the particle transfer film **10** spliced and wound into the product roll **20** as a leader or trailer.

Polymers suitable as coating **14** are soft resins that can be dissolved/dispersed in appropriate solvents such as water, acetone, THF, MeCL12/MeOH. These polymers are generally characterized as having a glass transition temperature below 20° C, ultimate elongations greater than 200 percent, and a Shore "A" hardness of less than 90 when made in bulk form. Suitable resins include thermoplastic polyurethanes, copolyesters, polyamids, and acrylics, as well as rubbers. The preferred resins are polyurethanes. Resin solids can vary from 2 percent to 30 percent depending on the resin/solvent combination used. Particle transfer film coatings 14 can be made from any one of a number of commercially available polyurethane mixes such as NUCLEAR sold by Samuel Bingham Co., W-645 from Winfield Industries Inc., and sold under the trade name Winthane, LB22800 from American Roller Co., and ESTANE 5703 from B.F.Goodrich Co. and to which mixture a polyol charge control agent is added. The following examples illustrate the preparation of a particle transfer film with a polyurethane coating incorporating a charge control agent of the invention present in the described amounts.

The base material can be selected from those employed in any of the converting industries such as the photographic industry. Examples of base materials include plastic films such as polyester, cellulose acetate, polyethylene terephthalate, polyamide, polyimide, triacetate, and polycarbonate; metals such as aluminum foil and aluminum alloy foil; papers such as ordinary papers, baryta paper, and plastic coated papers. If necessary, depending on the base material and resin coating used, a primer layer can be added to the base surface for promoting improved adhesion between the base and the elastometer coating; for instance, a layer may be provided by applying a copolymer material containing vinylidene chloride on the surface of a polyester base prior to applying the final resin coating.

### EXAMPLES 1-4

A solution made up of 10 percent ESTANE 5703 and 90% acetone is weighed out directly into a mixing vessel as rapidly as possible. A specified amount of a charge control agent, bis[oxydiethylenebis(polycaprolactone)yl]5-sulfo-1,3-benzenedicarboxylate-methyltriphenylphosphonium salt (referred to hereinafter as "EK CCA"), is added to the vessel and the contents thoroughly stirred. The EK CCA has the structure represented by 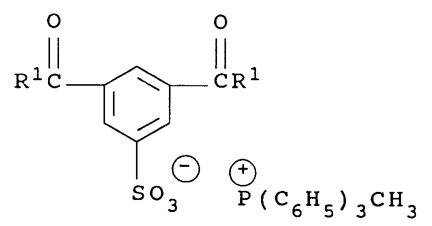
where R¹ represents: 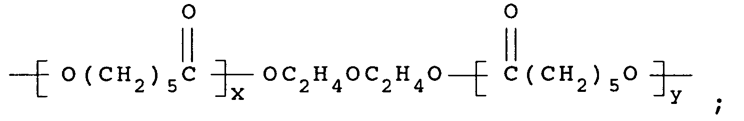
and where x and y are selected to provide a molecular weight for the R¹ group of about 530.

In Examples 1-4, 1 part, 2 parts, 3 parts, and 4 parts by volume of Kodak CCA, respectively, are added to 99, 98, 97, and 96 parts by volume, respectively, of ESTANE 5703 and mixed.

The solution is fed through piping via a pump to a feeding device such as an extrusion hopper having a long and narrow orifice. The solution exits the hopper and uniformly coats the base material.

After coating, the solution is impingement air dryed in a manner that causes the coating to form convective cells resulting in a reticulated or rough surface (Figure 1). The drying sequence is as follows:

| Temperature (C) | Temp (min) |
|---|---|
| 40 | 1.0 |
| 71 | 1.0 |
| 49 | 1.6 |
| 27 | 0.5 |
| 32 | 0.5 |
| 38 | 11. |

The surface resistivity (Ohm x 1012) particle transfer film **10** used in examples 1-4 was determined using the method described in ASTM Standard D257-91. Surface resistivity provides an indication of the ability of the surface to attract particulates. The higher the surface resistivity the lower the ability of the film to attract particles. Conversely, the lower the resistivity, the greater is the ability of the film to attract such particulates. The results are shown in the table below.

| Percent EK CCA by Wt. | Surface Resistivity Ohm x 10¹² 20%Rh at 20C | Surface Resistivity Ohm x 10¹² 50%Rh at 20C |
|---|---|---|
| 0 | 109.64 | 18.62 |
| 1 | 5.24 | 3.39 |
| 2 | 2.63 | 1.58 |
| 3 | 1.49 | 1.02 |
| 4 | 1.23 | 0.74 |

The results demonstrate that the PTF of the invention copolymerized with the non-leachable charge control agent significantly reduces the resistivity of the PTF, thus inhibiting its ability to hold an electrical charge.

The particle transfer film and method of the invention are useful for cleaning just about any conveyance element where maintaining a particle-free system is essential. The invention can therefore be employed in uses such as removing particulate contamination from conveyance rollers in film sensitizing and photofinishing operations.

The invention has been described in detail with particular reference to preferred embodiments thereof, but it will be understood that variations and modifications can be effected within the spirit and the scope of the invention.

## Claims

1. A particle transfer film comprising:
a substrate;
an exterior layer of polyurethane on the substrate, the polyurethane being copolymerized with a charge control agent of the formula 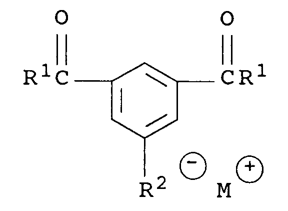 where
R¹ represents: 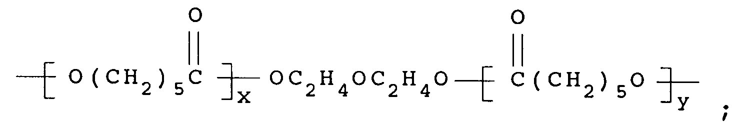 R² represents sulfonate, oxyphenylene sulfonate, oxycyclohexylene sulfonate or p-toluenesulfonamidosulfonyl;
x and y are integers which together are of sufficient value to achieve an R¹ molecular weight of 300 to 30,000; and
M represents hydrogen, an alkali metal, ammonium or P⁺(C₆H₅)₃CH₃; and,
wherein the charge control agent is nonleachable from the polyurethane and is present in an amount sufficient to impart a selected amount of electric charge resistivity to the polyurethane.

2. The particle transfer film of Claim 1, wherein the charge control agent is present in the amount of about 1 percent to about 4 percent by volume of the polyurethane.

3. The particle transfer film of Claim 2, wherein the charge control agent is bis[oxydiethylenebis(polycaprolactone)yl]5-sulfo-1,3-benzenedicarboxylate-methyltriphenylphosphonium salt.

4. The particle transfer film of Claim 1, wherein the polyurethane layer has a surface coverage in the range of about 1.0 to about 100 grams/m².

5. The particle transfer film of Claim 1, wherein the surface finish of the polyurethane layer is in the range of 1.25 to 3.50 micrometers.

6. The particle transfer film of Claim 1, wherein the polyurethanr layer has a thickness in the range of 0.0114 mm to 0.014 mm.

7. A method of cleaning a conveyance element, comprising contacting the element with the particle transfer film of any of Claims 1 to 6.
